# DEMANDE DE BREVET EUROPEEN

(11) **EP 1 475 173 A1**
(43) Date de publication de la demande: **10.11.2004**
(21) Numéro de dépôt: 04291163.6
(22) Date de dépôt: 05.05.2004
(51) Int. Cl.: B23B 51/00

(54) **Tête de foret de lissage**

(30) Priorité: 05.05.2003 FR 0305444
(71) Demandeur: Safety, 92100 Boulogne Billancourt (FR)
(72) Inventeur: Lize, Christian, 37540 Saint-Cyr-sur-Loire (FR); Quillin, Bruno, 37100 Tours (FR)
(74) Mandataire: Lepeudry-Gautherat, Thérèse

(57) **Abrégé**

La tête de foret comporte une arête de coupe frontale (25, 26), à extension radiale de diamètre de coupe déterminé par rapport à un axe géométrique (4) de rotation du foret, et comporte deux flancs longitudinaux opposés (6, 7 et 6A, 7A) d'appui sur la surface cylindrique d'un trou percé par le foret dans une pièce à usiner, les deux flancs (6, 7 et 6A, 7A) présentant mutuellement un diamètre d'extension maximale supérieur au diamètre de coupe de l'arête de coupe frontale (25, 26).

## Description

La présente invention concerne les forets.

Un foret comporte classiquement une tête présentant deux arêtes frontales de coupe opposées s'étendant radialement de part et d'autre de son axe et présentant globalement une forme de V qui assure le maintien du centrage dans le trou en cours de percement dans une pièce travaillée.

Les arêtes de coupe classiques présentent un rayon d'extension correspondant à celui du fût du foret, c'est-à-dire que, partant de la pointe du foret, elles se prolongent directement par la surface latérale cylindrique du fût. Cette surface cylindrique est en appui sur la surface en regard du trou, ce qui assure un guidage du foret.

Toutefois, l'extrémité du foret oscille sous l'effet de vibrations, si bien que la surface du trou présente des éraflures et donc une certaine rugosité, qui nécessite souvent de prévoir une opération finale de lissage des reliefs représentant cette rugosité. En outre, le trou final présente alors un diamètre excessif.

La présente invention vise à limiter l'amplitude de cette rugosité, et donc, le cas échéant, à éviter la nécessité de l'opération de lissage.

A cet effet, l'invention concerne une tête de foret comportant une arête de coupe frontale, à extension radiale de diamètre de coupe déterminé par rapport à un axe géométrique de rotation du foret, et comportant deux flancs longitudinaux opposés d'appui sur la surface cylindrique d'un trou percé par le foret dans une pièce à usiner, caractérisée par le fait que les deux flancs présentent mutuellement un diamètre d'extension maximale supérieur au diamètre de coupe de l'arête de coupe frontale.

Ainsi, dans un volume périphérique radialement au-delà de l'emprise de l'arête de coupe frontale, la tête de foret présente un volume de matière, pour lequel il est facile de prévoir qu'il ait une forme adaptée pour, lors de l'avance du foret, agir comme un coin repoussant et écrasant latéralement les reliefs de la paroi du trou qui sont situés à l'extérieur de l'emprise de l'arête de coupe frontale.

Le foret est donc bi-fonctionnel, puisqu'il perce et qu'il lisse le trou.

Il convient de remarquer que l'arête de coupe frontale peut présenter, transversalement par rapport à l'axe de rotation, une direction globale d'extension qui est angulairement décalée, en rotation autour de ce dernier, par rapport à une direction transversale selon laquelle les deux flancs sont opposés. Par ailleurs, les deux flancs peuvent être quasiment jointifs, c'est-à-dire constituer sensiblement deux moitiés complémentaires d'une surface sensiblement cylindrique de pourtour de la tête.

On notera que, dans une forme de réalisation pour laquelle l'arête de coupe frontale est disposée de façon dissymétrique par rapport à l'axe, c'est-à-dire qu'elle déborde plus d'un côté que de l'autre, le diamètre de coupe, ou d'emprise, de l'arête de coupe frontale, déterminé par son extrémité la plus externe, est alors supérieur à la distance séparant ses deux extrémités.

Un avantage induit par la présence des protubérances radiales, que constituent les deux flancs, réside dans le fait que ceux-ci constituent de bons appuis latéraux de guidage du foret, puisque les reliefs écrasés fournissent des forces de réaction centripètes.

La tête de foret peut présenter radialement une discontinuité, en termes d'arête de coupe, entre chaque arête de coupe frontale et le flanc associé, en particulier dans le cas où le flanc présente un diamètre maximal dans sa partie radialement avant.

Dans une forme de réalisation, les flancs présentent radialement un sommet arrondi, ou, en variante, aigu.

Les flancs peuvent chacun présenter un flanc avant, par rapport à une direction de rotation du foret, de lissage de la surface cylindrique du trou.

La matière en relief de la paroi du trou peut ainsi être rabattue au fond de rainures parasites et lissée.

En pareil cas, le flanc avant peut être agencé pour effectuer le lissage par un travail d'intégration, en refoulant, radialement par rapport à l'axe, de la matière de paroi de trou de pièce usinée, par écrasement de reliefs dans des sillons.

Le flanc avant de lissage est avantageusement bombé sensiblement en arc de cercle, par exemple de rayon inférieur à la moitié du diamètre de coupe de l'arête de coupe frontale.

En variante, le flanc avant de lissage est bombé sensiblement en un arc d'une parabole ouverte à l'opposé de l'arête de coupe frontale.

Dans une forme de réalisation particulière, le diamètre d'extension maximale des flancs croît, respectivement décroît en variante, en s'éloignant axialement de l'arête de coupe frontale.

La tête de foret peut alors présenter radialement une continuité, en termes d'arête de coupe, entre chaque arête de coupe frontale et une zone axialement avant du flanc associé, pour former un V à tronçons d'extrémité libre rabattus vers l'axe.

Les flancs peuvent présenter des arêtes sommitales respectives, correspondant au diamètre d'extension maximale, s'étendant au niveau d'une tranche de la tête de foret d'épaisseur n'excédant pas sensiblement 20 % d'une valeur d'épaisseur de la tête de foret.

La tranche est par exemple sensiblement centrée sur un plan médian de la tête de foret.

Les flancs peuvent présenter des arêtes sommitales respectives, correspondant au diamètre d'extension maximale, s'étendant en hélice autour de l'axe.

Les contraintes de couple résistant, exercées par la matière déformée de la paroi du trou, sont ainsi mieux réparties angulairement, ce qui limite encore l'amplitude des vibrations parasites.

La tête de foret peut appartenir, d'un seul tenant, à un foret ou bien être constituée par une plaquette de coupe prévue pour être rapportée sur un corps de foret.

L'invention sera mieux comprise à l'aide de la description suivante d'une forme de réalisation préférée de la tête de foret selon l'invention, en référence au dessin annexé, sur lequel :
- la figure 1 est une vue avant en perspective de la tête de foret, ici une plaquette de coupe, et
- la figure 2 est une vue arrière de la plaquette de la figure 1.

La référence 1 désigne une tête de foret qui, dans cet exemple, est une plaquette de coupe pour foret agencée pour être insérée partiellement et fixée par soudage, dans une fente frontale à extension diamétrale en bout d'un corps de foret, non représenté. Pour lui assurer une durée de vie accrue, la plaquette 1 est revêtue d'un matériau dur.

La plaquette 1 présente une symétrie par rapport à un axe 4 de rotation du foret. Elle comporte deux grandes faces opposées globalement planes et parallèles 20, 21, deux flancs longitudinaux 6, 7 et 6A, 7A sensiblement parallèles à l'axe 4, une face arrière 22 perpendiculaire à l'axe 4, et deux faces frontales 23, 24 mutuellement en V, déterminant deux arêtes frontales de coupe principales 25, 26 avec les grandes faces respectives 20 et 21.

Les arêtes de coupe principales 25 et 26 sont reliées par deux arêtes intermédiaires obliques 27, 28 situées de part et d'autre d'une arête centrale transversale 3, normale à l'axe 4 et sensiblement orthogonale aux grandes faces 20, 21. Il est ainsi formé globalement une arête de coupe frontale 25, 27, 3, 28, 26, ayant une extension radiale, ou rayon d'emprise, correspondant à une extrémité radialement externe 11, 11A de l'arête 25, 26.

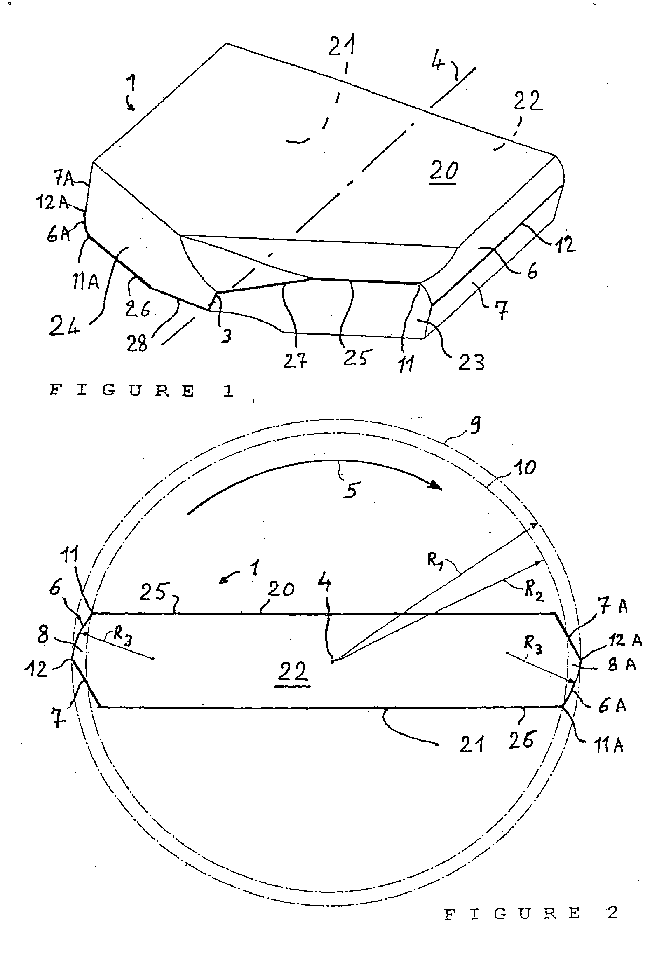

Comme l'illustre la figure 2, qui est une vue axiale arrière de la plaquette 1, les deux flancs 6, 7 et 6A, 7A présentent chacun une extension radiale dont le maximum correspond à un rayon R1 définissant un cercle de finition 9 de diamètre de finition D1 = 2 R1. Cette extension radiale maximale est celle de deux arêtes sommitales respectives 12, 12A, orientées sensiblement axialement, ici arrondies mais pouvant être anguleuses dans un autre exemple.

Les extrémités 11, 11A des arêtes de coupe principales 25, 26 présentent une extension radiale qui correspond à un rayon de coupe, ou taille, R2 par rapport à l'axe 4, définissant un cercle de coupe 10 de diamètre D2 = 2 R2. Le diamètre de coupe D2 est légèrement inférieur au diamètre de finition D1, le cercle de coupe 10 étant donc interne au cercle de finition 9. Il est ainsi défini un volume tubulaire périphérique.

Dans cet exemple, chaque arête sommitale 12, 12A est située à un niveau intermédiaire par rapport à l'épaisseur de la plaquette 1, ici à une "profondeur" comprise entre sensiblement 40% et 60% de l'épaisseur de la plaquette 1, si bien qu'elle sépare chaque flanc en les deux surfaces quasiment égales 6, 6A, respectivement 7, 7A. En variante, un point courant axialement de l'arête sommitale 12, 12A peut varier dans une plage d'épaisseur de par exemple 20 % de celle de la plaquette 1, cette plage pouvant ne pas être centrée à mi-épaisseur comme ci-dessus. La flèche 5 indiquant le sens de rotation de la plaquette 1, la surface 6, 6A est un flanc avant, actif, tandis que la surface 7, 7A est un flanc arrière en dépouille, ici plan.

Comme le montrent les figures 1 et 2, le flanc avant 6, 6A est relié, au niveau de sa partie antérieure par rapport au sens de rotation, au point d'extrémité 11, 11A, radialement externe, de l'arête principale 25, 26, décrivant donc le cercle de coupe 10 de rayon de coupe R2. Une arête, ici courbe, d'extrémité axialement avant du flanc 6, 6A, limitée aussi par la face frontale respective 23, 24 et visible sur la figure 1, ne constitue pas une arête de coupe. Il y a donc, radialement, une discontinuité fonctionnelle de coupe entre le point 11, 11A, d'extrémité radialement externe de l'arête de coupe principale 25, 26, et l'arête sommitale 12, 12A respective. Il n'est toutefois pas exclu que l'arête principale 25, 26 se poursuive encore sous forme d'arête de coupe sur une portion adjacente de l'arête courbe d'extrémité du flanc 6, 6A, dans la mesure où cette dernière comporte encore une portion radialement externe non coupante, servant au repoussement radial de la matière du volume tubulaire périphérique.

La matière formant les flancs 6, 7 et 6A, 7A, située au-delà d'une distance correspondant au rayon de coupe R2 par rapport à l'axe 4, constitue ainsi une protubérance 8, 8A radiale par rapport au rayon minimal garanti R2 de perçage ou découpe par les arêtes principales 25, 26.

En pratique, les vibrations parasites provoquent, dans la paroi du trou, des éraflures ou rainures au-delà du rayon de coupe R2, d'emprise des arêtes principales de coupe 25, 26, si bien que le volume cylindrique de perçage garanti, correspondant au cercle interne 10 de rayon de coupe R2, est entouré du volume tubulaire, formant une couche qui n'est pas totalement pleine de matière. Les protubérances 8, 8A ont pour but de lisser la paroi du trou en écrasant et refoulant radialement les reliefs parasites de la paroi du trou à bords limités par les éraflures ci-dessus, leur base étant éventuellement préalablement arasée par une zone de bord latéral à diamètre non maximal, c'est-à-dire inférieur à 2 R1. Les surfaces 6 et 7 sont globalement mutuellement inclinées pour que la protubérance 8 présente, en vue axiale, un profil à angle obtus, par exemple dans une plage de 120 à 150 degrés, ici environ 135 degrés, la surface avant 6 formant un coin et non une arête de coupe. La surface avant 6 est donc à dépouille "négative", si l'on considère que la surface arrière 7, de dépouille classique, est à dépouille positive.

Pour l'écrasement en direction radialement externe, afin d'éviter tout risque de frottement latéral excessif, la hauteur R1 - R2 des protubérances 8, 8A est choisie pour que le volume des sommets de reliefs écrasés n'excède pas le volume libre des fonds des "vallées", c'est-à-dire des éraflures, dans lesquels ils sont rabattus. Les hauteurs de relief, ou valeurs de rugosité en direction radiale, sont préalablement déterminées par des essais de forage dans divers matériaux, ce qui permet ensuite de choisir une plaquette 1 du diamètre voulu. Ainsi, si des reliefs parasites présentent par exemple un profil symétrique en dents de scie, éventuellement arrondies, ayant une hauteur de 2 fois la valeur (R1 - R2), ils sont, de façon optimale, lissés par écrasement de leur moitié supérieure, avec compactage dans le fond des éraflures.

Pour optimiser l'effet d'écrasement des protubérances 8, 8A, les flancs avant 6, 6A présentent ici une forme bombée, dans cet exemple en arc de cercle de rayon R3. Le rayon R3 est ici inférieur au rayon R2.

En variante, le flanc avant 6, 6A présente, en vue de face, une courbure variant de façon continue, par exemple est bombé sensiblement en un arc d'une parabole ouverte vers l'arrière du foret, donc à l'opposé de l'arête de coupe frontale 25, 26.

Dans l'un ou l'autre de ces cas, le flanc avant 6, 6A présente ainsi, par rapport à la tangente locale au cercle de rayon R2, un angle initial maximal, pour traiter les sommets des reliefs qui commencent à être attaqués, et ensuite, vers la protubérance 8, 8A, un angle réduit et donc à effet de coin accru car, alors, la masse de matière des reliefs à refouler s'accroît du fait que la protubérance 8, 8A se rapproche du fond des éraflures. En variante encore, les flancs arrière 7, 7A sont inexistants, c'est-à-dire que les protubérances 8, 8A sont situées au niveau des grandes faces respectives 21 et 20.

En variante, il peut aussi être prévu qu'une zone, antérieure en rotation, du flanc avant 6, 6A, c'est-à-dire proche de la grande face limitrophe 20, 21 respective, présente une forme d'arête de coupe prolongeant axialement l'arête de coupe principale 25, 26 correspondante, pour préalablement araser les parties de sommet des reliefs qui viennent d'apparaître, alors qu'une zone, postérieure en rotation, du flanc 6, 6A, plus proche de la protubérance 12, 12A, est en forme de coin pour assurer la fonction de base, qui est de repousser circonférentiellement et écraser radialement la partie à hauteur intermédiaire du relief.

En variante encore, les arêtes sommitales sensiblement longitudinales 12, 12A sont toutefois chacune orientées en hélice sur l'épaisseur de la plaquette de coupe 1, en rejoignant éventuellement, par l'une ou l'autre de leurs extrémités axiales, l'une des grandes faces 20 et 21. Dans un autre exemple, avec une tête de foret cylindrique et non plus plane comme ici, l'hélice peut donc s'étendre sur une plage angulaire bien supérieure à celle limitée par l'épaisseur de la plaquette 1 de cet exemple.

Il peut aussi être prévu que les arêtes sommitales 12, 12A présentent une extension radiale variable le long de l'axe 4, par exemple délimitant en rotation un cône d'axe 4. Le cône peut ainsi être ouvert vers l'avant pour éviter tout risque de frottement latéral excessif, ou être ouvert vers l'arrière, pour que l'écrasement des reliefs s'effectue progressivement lors de l'avance du foret. Dans ce dernier cas, une partie axialement avant de l'arête sommitale 12, 12A peut constituer une arête de coupe pour araser les sommets des reliefs latéraux, une partie axialement arrière de celle-ci, c'est-à-dire à diamètre supérieur, assurant ensuite le repoussement latéral de la matière. Dans ce cas particulier, l'arête de coupe principale 25, 26 peut être reliée à la partie axialement avant de l'arête sommitale 12, 12A, un tronçon d'extrémité de chaque branche du profil en V des arêtes de coupe principales 25, 26 étant ainsi rabattu vers l'axe 4 et formant sur celui-ci un angle faible, par exemple inférieur à 5 degrés.

Comme exposé ci-dessus, les protubérances 8, 8A effectuent un lissage et un calibrage du trou percé, ce qui permet d'éviter toute opération spécifique à cet effet.

## Revendications

1. Tête de foret (1) comportant une arête de coupe frontale (3, 25, 26, 27, 28), à extension radiale de diamètre de coupe déterminé (D2) par rapport à un axe géométrique (4) de rotation du foret, et comportant deux flancs longitudinaux opposés (6, 7 et 6A, 7A) d'appui sur la surface cylindrique d'un trou percé par le foret dans une pièce à usiner, **caractérisée par le fait que** les deux flancs (6, 7 et 6A, 7A) présentent mutuellement un diamètre d'extension maximale (D1) supérieur au diamètre de coupe (D2) de l'arête de coupe frontale (3, 25, 26, 27, 28).

2. Tête de foret selon la revendication 1, présentant radialement une discontinuité, en termes d'arête de coupe, entre chaque arête de coupe frontale (3, 25, 26, 27, 28) et le flanc (6, 7 et 6A, 7A) associé.

3. Tête de foret selon l'une des revendications 1 et 2, dans laquelle les flancs (6, 7 et 6A, 7A) présentent radialement un sommet (8, 8A) arrondi.

4. Tête de foret selon l'une des revendications 1 et 2, dans laquelle les flancs (6, 7 et 6A, 7A) présentent radialement un sommet (8, 8A) aigu.

5. Tête de foret selon l'une des revendications 1 à 4, dans laquelle les flancs (6, 7 et 6A, 7A) présentent chacun un flanc avant (6, 6A), par rapport à une direction de rotation (5) du foret, de lissage de la surface cylindrique du trou.

6. Tête de foret selon la revendication 5, dans laquelle le flanc avant (6, 6A) est agencé pour effectuer le lissage par un travail d'intégration, en refoulant, radialement par rapport à l'axe (4), de la matière de paroi de trou de pièce usinée, par écrasement de reliefs dans des sillons.

7. Tête de foret selon l'une des revendications 5 et 6, dans laquelle le flanc avant de lissage (6, 6A) est bombé sensiblement en arc de cercle.

8. Tête de foret selon la revendication 7, dans laquelle l'arc de cercle du flanc avant de lissage est de rayon (R3) inférieur à la moitié du diamètre de coupe (D2) de l'arête de coupe frontale (3, 25, 26, 27, 28) .

9. Tête de foret selon l'une des revendications 5 et 6, dans laquelle le flanc avant de lissage (6, 6A) est bombé sensiblement en un arc d'une parabole ouverte à l'opposé de l'arête de coupe frontale (3, 25, 26, 27, 28).

10. Tête de foret selon l'une des revendications 1 à 9, dans laquelle le diamètre d'extension maximale (D1) des flancs (6, 7 et 6A, 7A) décroît en s'éloignant axialement de l'arête de coupe frontale (3, 25, 26, 27, 28) .

11. Tête de foret selon l'une des revendications 1 à 9, dans laquelle le diamètre d'extension maximale (D1) des flancs (6, 7 et 6A, 7A) croît en s'éloignant axialement des arêtes frontales (2) .

12. Tête de foret selon la revendication 11 en dépendance de la revendication 1, présentant radialement une continuité, en termes d'arête de coupe, entre chaque arête de coupe frontale (3, 25, 26, 27, 28) et une zone axialement avant du flanc (6, 7 et 6A, 7A) associé, pour former un V à tronçons d'extrémité libre rabattus vers l'axe (4).

13. Tête de foret selon l'une des revendications 1 à 12, dans laquelle les flancs (6, 7 et 6A, 7A) présentent des arêtes sommitales respectives (8, 8A), correspondant au diamètre d'extension maximale (D1), s'étendant au niveau d'une tranche de la tête de foret d'épaisseur n'excédant pas sensiblement 20 % d'une valeur d'épaisseur de la tête de foret.

14. Tête de foret selon la revendication 13, dans laquelle la tranche est sensiblement centrée sur un plan médian de la tête de foret.

15. Tête de foret selon l'une des revendications 1 à 14, dans laquelle les flancs (6, 7 et 6A, 7A) présentent des arêtes sommitales respectives (8, 8A), correspondant au diamètre d'extension maximale (D1), s'étendant en hélice autour de l'axe (4).

16. Tête de foret selon l'une des revendications 1 à 15, constituée par une plaquette de coupe (1) prévue pour être rapportée sur un corps de foret.
